(19) Europäisches Patentamt
European Patent Office
Office européen des brevets

(11) Publication number : **0 368 457 B1**

(12) **EUROPEAN PATENT SPECIFICATION**

(45) Date of publication of patent specification : **07.04.93 Bulletin 93/14**

(51) Int. Cl.$^5$ : **G01C 21/00,** G01C 17/38

(21) Application number : **89309570.3**

(22) Date of filing : **20.09.89**

(54) **Compass system.**

(30) Priority : **29.10.88 GB 8825367**

(43) Date of publication of application : **16.05.90 Bulletin 90/20**

(45) Publication of the grant of the patent : **07.04.93 Bulletin 93/14**

(84) Designated Contracting States : **CH DE FR GB IT LI NL SE**

(56) References cited :
**US-A- 4 143 467**
**US-A- 4 347 730**
**US-A- 4 521 777**

(73) Proprietor : **BRITISH AEROSPACE PUBLIC LIMITED COMPANY**
**Warwick House, P.O. Box 87, Farnborough Aerospace Centre**
**Farnborough, Hants. GU14 6YU (GB)**

(72) Inventor : **Walpole,Anthony**
**British Aerospace (Dynamics) Ltd**
**Downshire Way Bracknell, Berks RG12 1QL (GB)**

(74) Representative : **Dowler, Edward Charles et al**
**British Aerospace plc, Corporate Intellectual Property Department, Park East, PO Box 87, Farnborough Aerospace Centre**
**Farnborough, Hants GU14 6YU (GB)**

**EP 0 368 457 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a compass system that is, attitude and heading apparatus, for use in a moving vehicle e.g. an aircraft.

The combination of gyroscope and magnetic measurements has long been used to provide a north indicating compass system for use on moving vehicles. Specifically such system usury comprise a directional gyro and a pendulous flux valve to measure the magnetic field.

The perceived limitations of existing system are:

a) Gradual loss of accuracy in turns and other manoeuvres;

b) Requirements for lengthy and onerous ground calibration procedures;

c) Possible complete loss of correct heading during aerobatic or inadvertent manoeuvres. Recovery requires a lengthy reset procedure to restore correct heading indication.

With such existing gyromagnetic system the flux valve is subject to errors caused by misalignment or mispositioning in the moving vehicle; spurious magnetic fields and electrical anomalies. US-A4 143 467 describes apparatus and a method for compensating the flux valve in which the vehicle is orientated in accordance with a plurality of headings and the flux valve output and gyro output are measured at each heading to provide heading error signals used to compensate the heading output of the flux valve.

A similar heading reference system is disclosed in US-A-4347 730 employing a magnetic compass, magnetic flux valve and gyroscope in which the vehicle housing the system, such as an aircraft or tank, is orientated in one direction, the compass and gyroscope outputs compared and an error signal generated. The vehicle is reorientated and the process repeated until sufficient information is available to recalibrate the system.

These procedures still require the vehicle operator to carry out compass calibration manoeuvres which can be time consuming and relatively imprecise operations.

On the contrary, the present invention involves the use of one or more rate gyroscopes and a magnetometer and means for utilising the outputs from these instruments automatically to calculate vehicle attitude.

In the past there have been problem in combining these two different types of data in a mathematically tractable and a computationally efficient manner in strapdown instrumentation.

According to the present invention there is provided attitude and heading apparatus, which apparatus includes magnetometer means, gyroscope means and a control unit, for use in a moving vehicle, characterised in that the magnetometer means measures the Earth's magnetic field in three axes to produce a measured value output;

the gyroscope means measures vehicular angular rate about at least two orthogonal axes to produce a measured value output, which gyroscope means includes at least one gyroscopes movably mounted by means of a turntable to permit the spin axis of the gyroscope to be maintained in non-alignment with the Earth's magnetic field; and

the control unit includes means for receiving the measured value output of the Earth's magnetic field in three axes from the magnetometer means and the measured value output of vehicular angular rate in at least two axes from the gyroscope means and combining them, using quaternion calculus in which the outputs from the magnetometer and gyroscope means are each converted into a quaternion and combined to form a produce providing the vehicle attitude information.

The vehicle attitude is expressed as a quaternion, representing the vehicle rotation between an initial, reference attitude and the actual current attitude. This quaternion comprises two parts, the first derived purely from the magnetic data and the second derived from the vehicle angular rate data. These two are then combined to form the overall attitude output.

Generally, quaternions can be used to present a rotation 0 about any arbitrary axis A in the form:

$$\underbrace{\underline{A}\ \mathrm{Sin}\ \theta/2}_{\text{vector}} + \underbrace{\mathrm{Cos}\ \theta/2}_{\text{scalar}}$$

The first and second quaternions are multiplied to form the third quaternion.

A quaternion produce is as follows:

$$(V_1 + S_1)(V_2 + S_2) = (V_1 \times V_2 + S_1 V_2 + S_2 V_1) \text{ (new vector part) } + (S_1 S_2 - V_1.V_2) \text{ (new scalar part)} \quad (1)$$

Where $V_2$ and $S_2$ represent vectors and scalars respectively.

Movably mounting the gyroscope permits the spin axis of the gyroscope to be maintained in non-alignement with the Earth's magnetic field which ensures that rotation about the Earth's magnetic field can be measured.

Advantageously the turntable is fixed to a rotatable shaft.

Preferably the gyroscope means includes means for rotating the turntable, and pick-off means operative to supply signals indictive of the angular position of the turntable.

Conveniently the gyroscope means is operable to measure vehicular angular rate about three orthogonal axes.

Preferably the magnetometer means and gyroscope means are strapdown means.

A particular embodiment of the present invention

will now be described, by way of example, with reference to the accompanying drawings, in which:

Figure 1 is a block diagram of the main components of an attitude and heading apparatus or compass system of the present invention;

Figure 2 is a diagram of part of the apparatus of Figure 1;

Figure 3 is a block diagram illustrating the steps used to derive vehicle attitude from the outputs of the components of the apparatus of Figures 1 and 2; and

Figure 4 is a block diagram illustrating the use of level sensor output in the apparatus of the Invention.

Referring to Figure 1 of the accompanying drawing, an attitude and heading apparatus or compass systems of the present invention, generally indicated at 10 includes a two axis rate gyroscope 12 to measure vehicle angular rate,

strapdown magnetometer means 14 to measure the Earth's magnetic field in three orthogonal axes;

a level indicator 18;

a control unit 20 comprising a digital processor to process the instrument outputs and the operator inputs and to control system operation;

an operator interface unit 22 comprising a display for displaying vehicle heading and other system data and means for an operator to input commands.

The operator interface unit 22 comprises means for an operator to:

(i) Input commands to initiate, control and switch off the system;

(ii) Receive data on the measurements made by the system, including vehicle heading;

(iii) Receive data on the current operational status of the system.

Referring to Figure 2, the gyroscope 12 is mounted on a turntable 24 which is fixed to a rotatable shaft 26. Bearings 28 and 30 permit rotation of the gyroscope 12 about the axis A.

A torque motor (not shown) drives the turntable 24 and receives power through slip rings 32. An angle pick-off arrangement (not shown) is provided to supply signals indicative of the angular position of the turntable.

In use, the position of the turntable 24 is controlled by the control unit 20 so that the spin axis of the gyroscope 12 is maintained substantially orthogonal to the axis of the Eath's magnetic field. This feature ensures that rotation about the axis of the Earth's magnetic field can be detected even though the magnetometer means 14 would be insensitive to such rotation.

In use, the control unit 20 performs the following functions:

(i) Controls operation of the overall system in accordance with the operator instructions received from the operator interface unit 22 and the signals received from other units of the system;

(ii) Inputs data from the instruments, turntable 24 and unit 22;

(iii) Outputs data to the turntable 24 and unit 22;

(iv) Outputs signals to all units of the system to command their initiation, operation and switch-off in the required manner. This function to include commands to perform unit self test functions and to report status;

(v) Computes vehicle attitude estimates from the input intrumental data. The precise algorithms are selectable in response to the overall control function (i), to reflect operator instructions and according to the current availability of valid signals from the various instruments;

(vi) Controls power supplies (not shown) to provide the required electrical power to the other units of the system.

An optional feature is an output interface, driven by the control unit 20, to permit transmission and receipt of data to other system, should this apparatus be required to form part of a larger system. In this case, some or all the functions of the operator interface unit 22 may be achieved via this interface.

The principles of operation of the apparatus 10 will now be described with reference to Figure 3. The apparatus 10 utilises some or all of the magnetometer, gyroscope and level data to compute vehicle attitude. Several algorithms are available for use according to requirements and conditions.

In straight and level flight, magnetometer, gyroscope and level data should all be available. The level data provides a long term reference check and can be used to correct drift errors. In manoeuvring flight, the level data is unreliable and the system must operate in a different mode and compute vehicle attitude from magnetic and gyroscope data alone. If any of the instruments is inoperative, the system operates in a reversionary mode with the inputs which are available. The control unit 20 collects information regarding flight characteristics and the status of the instruments and chooses the appropriate mode of operation.

For manoeuvring flight, the current measurement of the magnetic vector is input, normalised and converted into a first quaternion according to the following equation: -

$$q_m = \mathrm{NORM}(B + R) \quad (2)$$

where B represents the normalised input magnetic vector in body axes;

R represents the normalises magnetic vector in reference axes;

NORM represents vector normalisation.

The body angular rate vector, $w_b$ must be formed from a combination of gyro and magnetic data, since neither source alone can provide more than two of the required axes of information, The former cannot

sense rotation about its spin axis and the latter cannot sense rotation about the magnetic vector. It is in order to ensure that the following procedure is well conditioned that the gyro is to be maintained with its spin axis orthogonal to the magnetic vector.

The component of body rate obtainable from the magnetic data is obtained as follows:

$w_m$ = B′ x NORM(B) (vector cross product) (3)

where B′ is the derivative of B and is obtained using appropriate algorithms.

The total body rate vector $w_b$ may be formed from the gyro and magnetic data in two ways:

(i) $w_{b1} = w_m + (w_G.B + (s.B)(w_m.s))B/(1 + (s.B)^2)$ (4)

(ii) $w_{b2} = w_G + (w_m.s + (s.B)(w_G.B))s/(1 + (s.B)^2)$ (5)

or

(iii) by any suitable mix of these two, using

$$w_b = K\, w_{b1} + (1 - K)\, w_{b2} \quad (6)$$

where

$w_G$ = the rate output, in body axes

s = gyro spin axis

K = arbitrary constant

The position of the gyroscope spin axis s is determined by the position of the turntable 24 and is ideally orthogonal to the magnetic vector B, The s.B terms in equations (4) and (5) above are to take account of cases where the gyroscope spin axis s is skewed relative to the magnetic vector B.

The body rate data is input, resolved onto the (R + B) axis and integrated:

$$A' = \frac{w_b.(R + B)}{(1 + R.B)} \quad (7)$$

The integration of A′ to form A may be carried out by any of the standard techniques.

The A output is used to form the second quaternion according to the following equation

$$q_w = (R \,\mathrm{Sin}\, A/_2 + \mathrm{Cos}\, A/_2) \quad (8)$$

The final output or third quaternion is formed simply by multiplying the two quaternions described above:

$$q = q_w\, q_m \quad (9)$$

In level flight, the output from a level sensor is also utilised. Figure 4 illustrates schematically how the output from a level sensor 36 is used via a gain device 38 as an angular rate component to slow the output q (where $q = q_w\, q_m$) from the gyro and magnetic sensors in an integrator 40. The final output $q_F$ form the basis for the next step in the operation. A cut-out device 42 prevents use of level sensor signals in manoeuvring flight.

## Claims

1. Attitude and heading apparatus, for use in a moving vehicle, which apparatus includes magnetometer means (14), gyroscope means and a control unit (20), characterised in that

   the magnetometer means (14) is adapted to measure the Earth's magnetic field in three axes to produces a measured value output,

   the gyroscope means is adapted to measure vehicular angular rate about at least two orthogonal axes to produce a measured value output, which gyroscope means includes at least one gyroscope (12) movably mounted by means of a turntable (24) to permit the spin axis of the gyroscope (12) to be maintained in non-alignement with the Earth's magnetic field; and

   the control unit (20) includes means for receiving the measured value output of the Earth's magnetic field in three axes from the magnetometer means ( 14 ) and the measured value output of vehicle angular rate in at least two axes from the gyroscope means and combining them, using quaternion calculus in which the outputs from the magnetometer gyroscope means are each converted into a quaternion and combined to form a product providing the vehicle attitude information.

2. Apparatus according to claim 2, wherein the turntable (24) is fixed to a rotatable shaft (26).

3. Apparatus according to claim 1 or claim 2 wherein the gryoscope means includes means for rotating the turntable (24), and pick-off means operative to supply signals indicative of the angular position of the turntable (24).

4. Apparatus according to claim 3 wherein the control unit (20) is operative to maintain the spin axis of the gyroscope (12) substantially orthogonal to the axis of the Earth's magnetic field.

5. Apparatus according to claim 1, wherein the gyroscope means (12) is operable to measure vehicle angular rate about three orthogonal axes.

6. Apparatus according to any one of claims 1 to 5, wherein the magnetometer means (14) and gyroscope means (12) are operable to measure vehicle angular rate about three orthogonal axes.

7. Apparatus according to any one of the preceding claims, including level sensing means (18, 36) wherein the control unit (20) includes an integrator (40) for combining an output from the level sensing means (18, 36) using quaternion calculus, with the product providing the vehicle attitude information to for a further product representing level attitude information.

**Patentansprüche**

1. Vorrichtung zur Lage- und Kursbestimmung, zur Benutzung in einem sich bewegenden Fahrzeug, mit einem Magnetometer (14), mit einer Gyroskopanordnung und mit einer Steuereinheit (20), dadurch gekennzeichnet, daß
das Magnetometer (14) derart ausgebildet ist, daß das Erdmagnetfeld in drei Achsen gemessen wird, um einen Meßwertausgang zu liefern,
die Gyroskopanordnung so ausgebildet ist, daß sie die Winkelgeschwindigkeit des Fahrzeuges um wenigstens zwei senkrecht aufeinanderstehende Achsen mißt, um einen Meßwertausgang zu liefern, wobei die Gyroskopanordnung wenigstens ein Gyroskop (12) aufweist, das beweglich mittels eines Drehtisches (24) gelagert ist, damit die Drehachse des Gyrospopes (12) in einer Lage gehalten werden kann, in der sie nicht auf das Erdmagnetfeld ausgerichtet ist und
die Steuereinheit (20) Mittel aufweist, um den Meßwertausgang des Erdmagnetfeldes in drei Achsen vom Magnetometer (14) und den Meßwertausgang der Winkelgeschwindigkeit des Fahrzeuges um wenigstens zwei Achsen vom Gyroskop zu empfangen und sie zu kombinieren, wobei eine Quaternionrechnung benutzt wird, bei der die Ausgänge von der Magnetometer-Gyroskop-Anordnung jeweils in ein Quaternion umgewandelt und kombiniert werden, um ein Produkt zu erzeugen, welches eine Lageinformation für das Fahrzeug liefert.

2. Vorrichtung nach Anspruch 1, bei welcher der Drehtisch (24) an einer drehbaren Welle (26) festgelegt ist.

3. Vorrichtung nach den Ansprüchen 1 oder 2, bei welcher die Gyroskopanordnung Mittel aufweist, um den Drehtisch zu drehen und ein Aufnehmer Signale liefert, die die Winkellage des Drehtisches (24) anzeigen.

4. Vorrichtung nach Anspruch 3, bei welcher die Steuereinheit (20) die Drehachse des Gyroskopes (12) im wesentlichen senkrecht zur Achse des Erdmagnetfeldes hält.

5. Vorrichtung nach Anspruch 1, bei welcher die Gyroskopanordnung (12) die Winkelgeschwindigkeit des Fahrzeuges um drei senkrecht aufeinanderstehende Achsen mißt.

6. Vorrichtung nach einem der Ansprüche 1 - 5, bei welcher das Magnetometer (14) und die Gyroskopanordnung die Winkelgeschwindigkeit des Fahrzeuges um drei senkrecht zueinander stehende Achsen messsen.

7. Vorrichtung nach einem der vorhergehenden Ansprüche, welche einen Horizontalflugsensor (18,36) aufweist, wobei die Steuereinheit (20) einen Integrator (40) enthält, um einen Ausgang von dem Horizontalflugsensor (18,36) unter Benutzung der Quaternionrechnung mit dem Produkt zu kombinieren, welches die Fahrzeuglageinformation liefert, um ein weiteres Produkt zu erzeugen, welches die Pegellageinformation representiert.

**Revendications**

1. Appareil d'attitude et de cap, pour emploi dans un véhicule mobile, appareil qui comprend un moyen de magnétomètre (14), un moyen de gyroscope et un ensemble de commande (20), caractérisé en ce que :
le moyen de magnétomètre (14) est destiné à mesurer le champ magnétique terrestre dans trois axes afin de produire la sortie d'une valeur mesurée,
le moyen de gyroscope est destiné à mesurer la vitesse angulaire du véhicule autour d'au moins deux axes orthogonaux afin de produire la sortie d'une valeur mesurée, moyen de gyroscope qui comprend au moins un gyroscope (12) monté de manière mobile par un plateau tournant (24) afin de permettre à l'axe de rotation du gyroscope (12) d'être maintenu en non-alignement avec le champ magnétique terrestre; et
l'ensemble de commande (20) comprend un moyen pour recevoir la sortie de la valeur mesurée du champ magnétique terrestre dans trois axes en provenance du moyen de magnétomètre (14) et la sortie de la valeur mesurée de la vitesse angulaire du véhicule dans au moins deux axes en provenance du moyen de gyroscope et pour les combiner, en utilisant un calcul quaternionique dans lequel les sorties des moyens de gyroscope et de magnétomètre sont chacune converties en un quaternion et combinées pour former un produit fournissant l'information sur l'attitude du véhicule.

2. Appareil selon la revendication 2, dans lequel le plateau tournant (24) est fixé à un arbre rotatif (26).

3. Appareil selon la revendication 1 ou la revendication 2, dans lequel le moyen de gyroscope comprend un moyen pour faire tourner le plateau tournant (24), et un moyen de capteur fonctionnant pour fournir des signaux représentatifs de la position angulaire du plateau tournant (24).

**4.** Appareil selon la revendication 3, dans lequel l'ensemble de commande (20) peut fonctionner pour maintenir l'axe de rotation du gyroscope (12) sensiblement orthogonal à l'axe du champ magnétique terrestre.

**5.** Appareil selon la revendication 1, dans lequel le moyen de gyroscope (12) peut fonctionner pour mesurer la vitesse angulaire du véhicule autour de trois axes orthogonaux.

**6.** Appareil selon l'une quelconques des revendications 1 à 5, dans lequel le moyen de magnétomètre (14) et le moyen de gyroscope (12) peuvent fonctionner pour mesurer la vitesse angulaire du véhicule autour de trois axes orthogonaux.

**7.** Appareil selon l'une quelconques des revendications précédentes, comprenant un moyen de détection de niveau (18, 36) dans lequel l'ensemble de commande (20) comporte un intégrateur (40) pour combiner une sortie provenant du moyen de détection de niveau (18, 36) en utilisant un calcul quaternionique, et le produit fournissant l'information sur l'attitude du véhicule pour un autre produit représentant l'information sur l'attitude et le niveau.

Fig. 1.

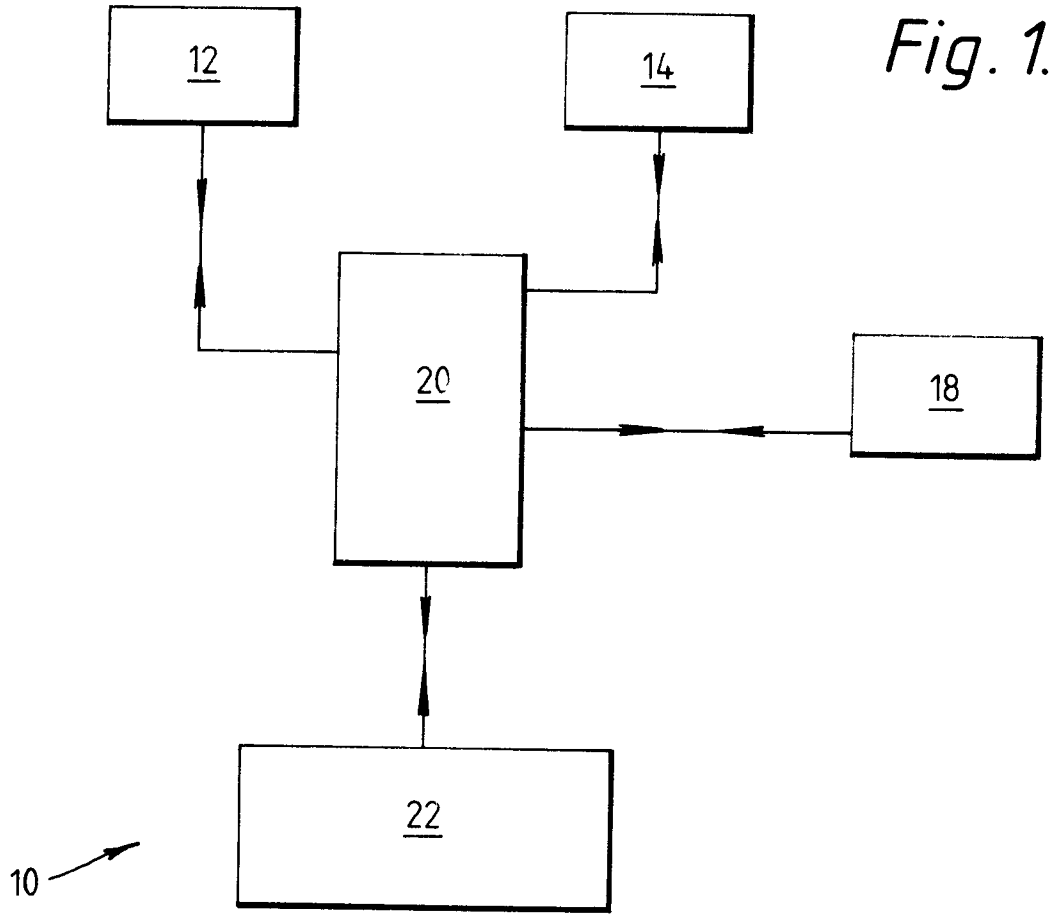
12
14
20
18
22
10

Fig. 4.

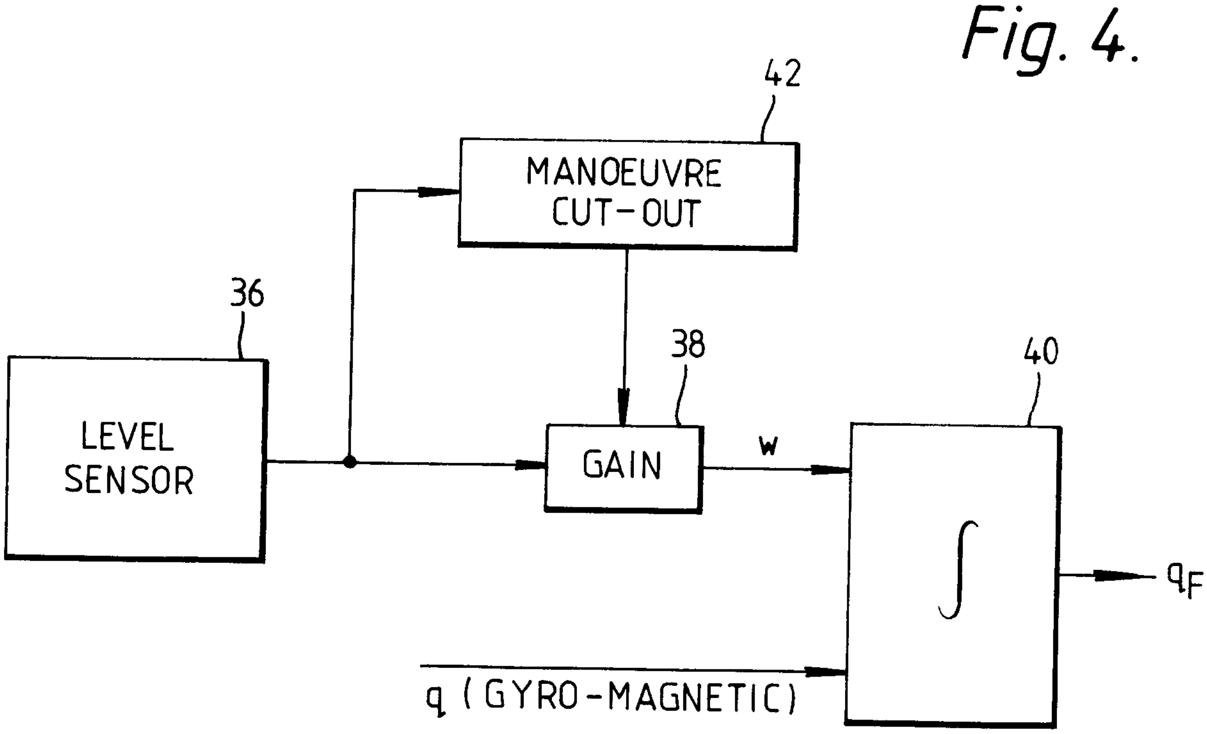
42
MANOEUVRE
CUT-OUT
36
38
40
LEVEL
SENSOR
GAIN
w
∫
$q_F$
q (GYRO-MAGNETIC)

Fig. 2.

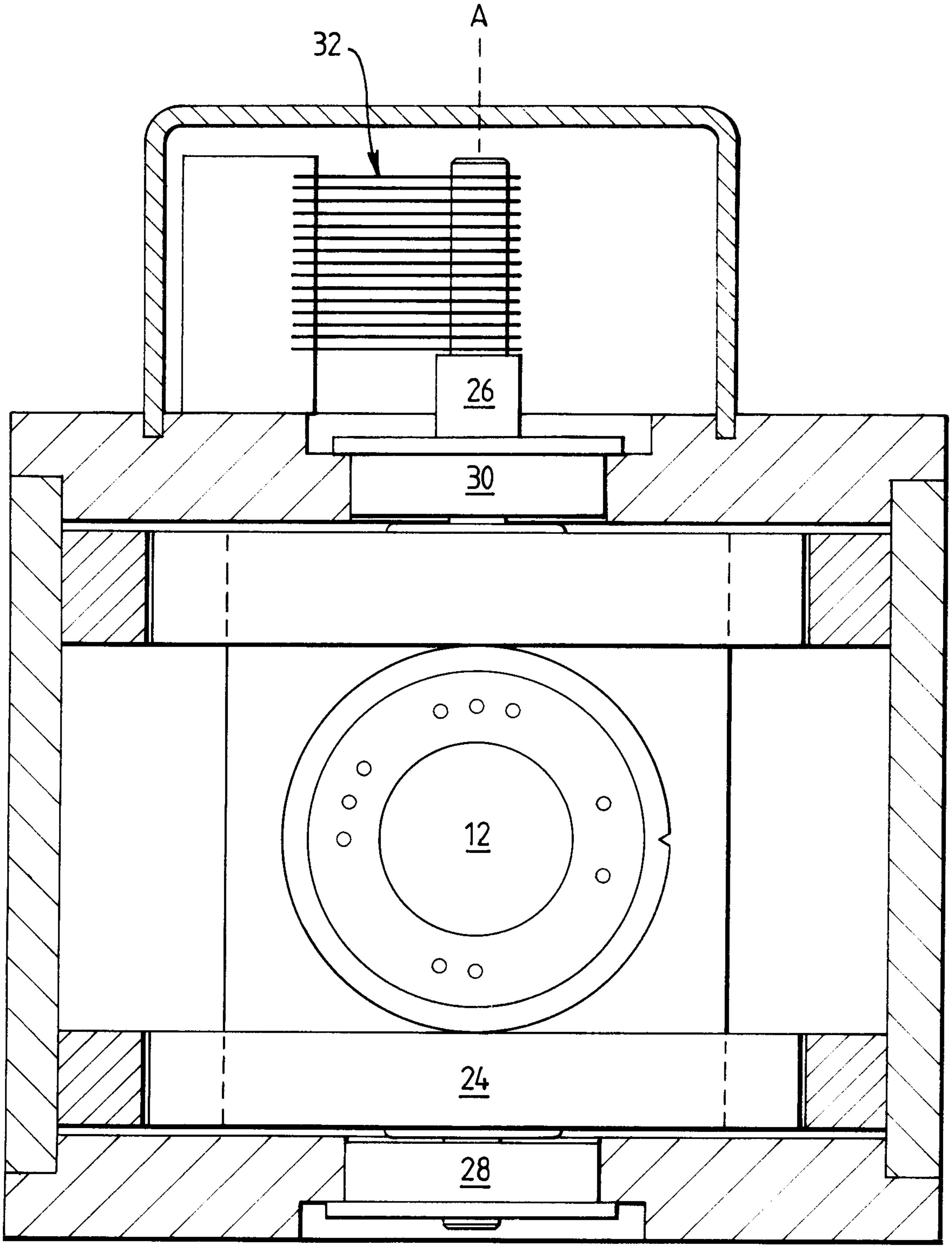

Fig.3.

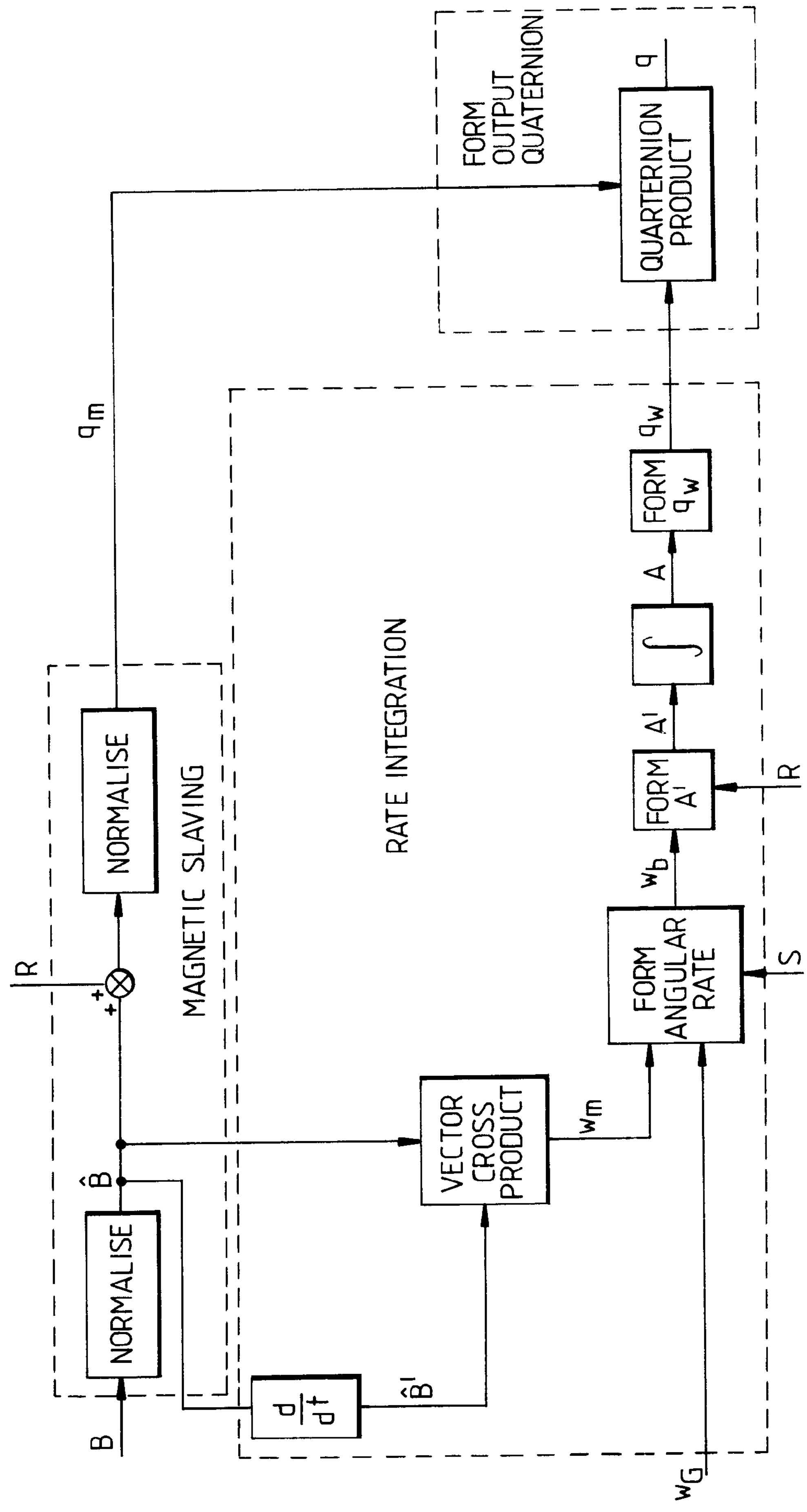
B
NORMALISE
B̂
R
NORMALISE
MAGNETIC SLAVING
$q_m$
d/dt
B̂'
VECTOR CROSS PRODUCT
$w_m$
RATE INTEGRATION
FORM ANGULAR RATE
S
$w_G$
$w_b$
FORM A'
R
A'
∫
A
FORM $q_w$
$q_w$
QUARTERNION PRODUCT
q
FORM OUTPUT QUATERNION